# EUROPÄISCHE PATENTANMELDUNG

(11) **EP 1 225 088 A1**
(43) Veröffentlichungstag der Anmeldung: **24.07.2002**
(21) Anmeldenummer: 01200182.2
(22) Anmeldetag: 18.01.2001
(51) Int. Cl.: B60N 2/30

(54) **Zum Einbau in ein Fahrzeug bestimmter, hochklappbarer Stuhl**

(71) Anmelder: Pewe Enschede Holding B.V., 7545 MV Enschede (NL)
(72) Erfinder: Falize, Antoon Maria Johannes, 5928 PA Venlo (NL)
(74) Vertreter: Vollebregt, Cornelis Jacobus, Ir.

(57) **Zusammenfassung**

Die Erfindung betrifft einen zum Einbau in ein Fahrzeug bestimmten hochklappbaren Stuhl, wobei ein Sitz durch eine sich in der Nähe der Seite des Sitzes befindlichen, sich hauptsächlich waagrecht erstreckenden Gelenkachse mit einer am Aufbau des Fahrzeuges zu befestigenden Stützvorrichtung gekoppelt ist. Die Stützvorrichtung ist mit einem sich nach oben erstreckenden Teil versehen, dessen oberes Ende sich in der Verwendungsposition des Stuhls auf einem höheren Niveau als der Sitz befindet. Ein Dreipunktgurt ist befestigt, dessen eines Ende in der Höhe des Sitze mit der Stützvorrichtung verbunden ist, während der Gurt durch eine in der Nähe des oberen Endes des sich nach oben erstreckenden Teils der Stützvorrichtung angebrachte Führungsvorrichtung weitergeführt ist. Der Schließpunkt des Gurtes befindet sich an der von der Stütze abgewendeten Seite des Sitzes.

## Beschreibung

Die Erfindung betrifft einen zum Einbau in ein Fahrzeug bestimmten hochklappbaren Stuhl, wobei ein Sitz durch eine nahe der Seite des Sitzes gelegene, sich hauptsächlich waagrecht erstreckende Gelenkachse mit einer am Aufbau des Fahrzeuges zu befestigenden Stützvorrichtung gekoppelt ist.

Solche hochklappbaren Stühle werden zum Beispiel in Busse für den Personentransport eingebaut. Indem die an den Seitenwänden des Aufbaues befestigten Stühle hochklappbar gemacht werden, kann durch das Hochklappen der Stühle, in die Längsrichtung des Fahrzeuges betrachtet, ein freier Raum geschaffen werden, der eine große Breite aufweist, was z.B. für den Transport von in Rollstühlen sitzenden Personen wichtig ist.

Gesetzlich ist es nun in vielen Ländern Pflicht, daß für den in einem Bus oder ähnlichem Fahrzeug sitzenden Passagier Sicherheitsgurte zur Verfügung stehen.

Ziel der Erfindung ist es, einen hochklappbaren Stuhl der obengenannten Art bereitzustellen, der mit einem Sicherheitsgurt versehen ist, so daß ein solcher hochklappbarer Stuhl als eine mit einem Sicherheitsgurt ausgestattete Einheit geliefert werden kann, die in ein Fahrzeug eingebaut werden kann, ohne daß dabei zum Anbringen des Sicherheitsgurtes, außer der Befestigung des hochklappbaren Stuhls am Aufbau des Fahrzeuges durch die Stützvorrichtung, noch weitere Maßnahmen getroffen werden müssen.

Gemäß der Erfindung kann dies erreicht werden, indem die Stützvorrichtung mit einem sich nach oben erstreckenden Teil versehen ist, dessen oberes Ende sich in der Verwendungsposition des Stuhls auf einem höheren Niveau als der Sitz befindet, während ein Dreipunktgurt befestigt ist, dessen eines Ende in der Höhe des Sitzes mit der Stützvorrichtung verbunden ist und der Gurt durch eine in der Nähe des oberen Endes des sich nach oben erstreckenden Teils der Stützvorrichtung befestigte Führungsvorrichtung weitergeführt ist, während der Schließpunkt des Gurtes sich an der von der Stütze abgewendeten Seite des Sitzes befindet.

Durch erfindungsgemäße Anwendung der Konstruktion kann eine robuste solide Einheit, versehen mit einem hochklappbaren Sitz und einem Sicherheitsgurt, zum Einbau in Fahrzeuge erhalten werden, so daß solche Einheiten auf einfache Art und Weise in ein Fahrzeug wie einen Bus eingebaut werden können.

Die Erfindung wird nachfolgend anhand einiger in den beiliegenden Figuren schematisch dargestellten Ausführungsformen der erfindungsgemäßen Konstruktion näher erläutert.
- Figur 1: zeigt eine Vorderansicht einer Ausführungsform eines hochklappbaren Stuhls gemäß der Erfindung.
- Figur 2: zeigt in kleinerem Maßstab eine perspektivische Vorderansicht des in Figur 1 dargestellten Stuhls.
- Figur 3: ist eine perspektivische Rückansicht des in Figur 2 dargestellten Stuhls.
- Figur 4: zeigt eine der Figur 2 entsprechende Vorderansicht einer zweiten Ausführungsform eines hochklappbaren Stuhls gemäß der Erfindung.

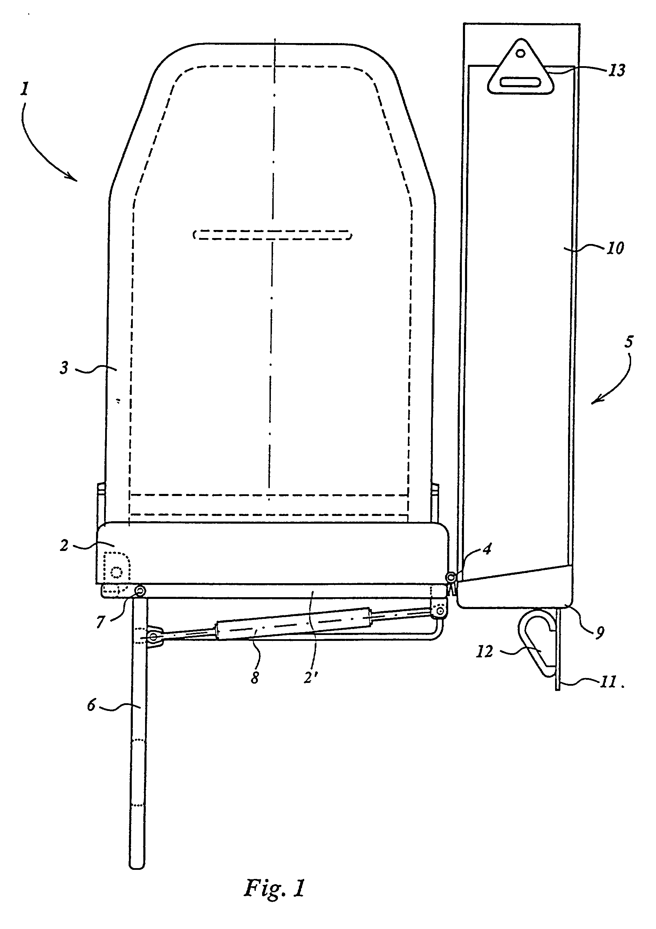

Der in den Figuren 1-3 dargestellte Stuhl 1 umfaßt einen mit einem Sitzgestell 2' ausgestatteten Sitz 2 und eine Rückenlehne 3. Die Rückenlehne 3 ist auf an sich bekannte Art und Weise in der Nähe ihrer Unterseite um eine waagrechte Gelenkachse hinsichtlich des Sitzes 2 schwenkbar zwischen der in den Figuren dargestellten aufrechten Position der Rückenlehne 3 und einer zweiten Position, in der die Rückenlehne 3 auf der Oberfläche des Sitzes 2 liegt.

Der Sitz 2 ist durch eine sich entlang einer Seite des Sitzes 2 erstreckende Gelenkachse 4 mit einer neben dem Sitz aufgestellten Stützvorrichtung 5 gelenkig gekoppelt. In der Nähe der von der Stützvorrichtung 5 abgekehrten Seite des Sitzes ist ein Fuß 6 befestigt, der sich in der in den Figuren dargestellten Verwendungsposition des Stuhls unter dem Sitz befindet und senkrecht auf einer nicht näher dargestellten Bodenfläche zur Unterstützung des Stuhls steht.

Der Fuß 6 ist dabei durch eine in der Nähe seines oberen Endes gelegene Gelenkachse 7 gelenkig mit dem Sitz gekoppelt, so daß, wie üblich, der Fuß 6 von der in den Figuren dargestellten Position aus gegen die Unterseite des Sitzes 2 hochgeklappt werden kann.

Des weiteren kann zwischen der Stützvorrichtung 5 und der Unterseite des Sitzes noch eine sogenannte Gasfeder 8 zur Vereinfachung des nach oben Schwenkens des Stuhls 1, nachdem die Rückenlehne 3 auf den Sitz 2 niedergeklappt ist, befestigt sein.

Die Stütze 5 enthält ein im Querschnitt hauptsächlich U-förmig waagrecht befestigtes Profil oder Gestellbalken 9. Wie aus den Figuren deutlich sein wird, ist der Sitz durch die Gelenkachse 4 mit einem Bein dieses U-förmigen Profils 9 gekoppelt.

An dem nahe der Rückenlehne 3 gelegenem Ende des Profils 9 ist an dieses Profil 9 ein zur Stützvorrichtung 5 gehörender, sich vom Profil 9 nach oben erstreckender Balken 10 befestigt. Das obere Ende des Balkens 10 befindet sich, wie in den Figuren dargestellt, in der Verwendungsposition des Stuhls in der Höhe des oberen Endes der Rückenlehne 3.

An der Unterseite des Gestellbalkens 9 ist eine sich nach unten erstreckende Platte 11 befestigt. An dieser Platte ist die übliche, in den Figuren schematisch dargestellte Spulenkombination 12 eines nicht näher dargestellten Dreipunktsicherheitsgurtes befestigt. Für die Führung des Gurtes ist am oberen Ende des sich nach oben erstreckenden Gestellbalkens 10 eine an sich bekannte und übliche Führungsvorrichtung 13 befestigt.

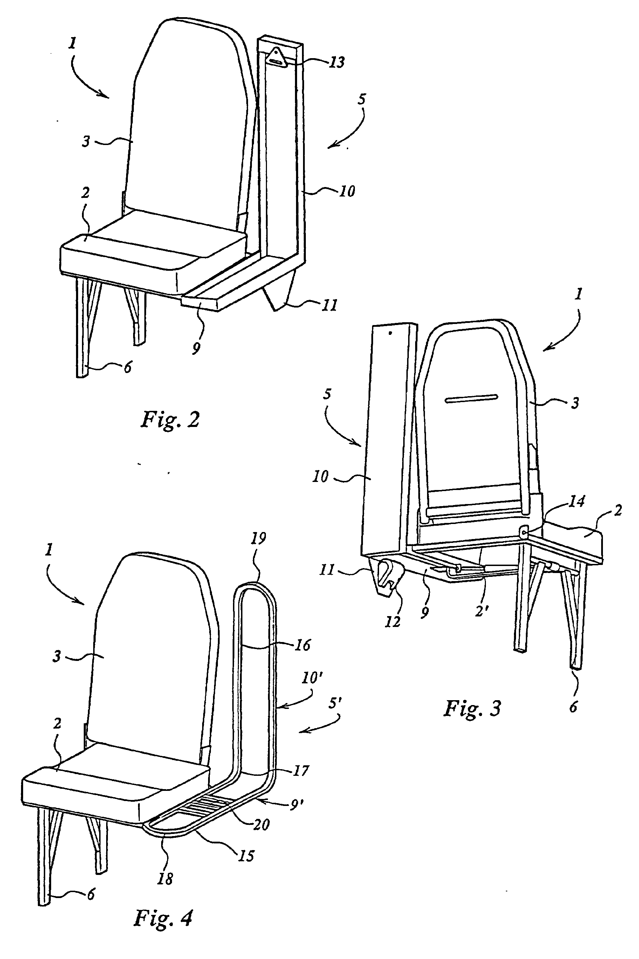

Des weiteren ist in der Nähe der Hinterseite des Sitzes an der von der Stützvorrichtung 5 abgewendeten Seite des Sitzes ein Koppelstück 14 (Figur 3) an dem den Sitz 2 unterstützenden Sitzungsgestell 2' befestigt. Dieser Kopplungsteil dient zum Ankoppeln eines Schlußteils des Sicherheitsgurtes, welches bestimmt ist, um mit dem mit dem Gurt verbundenen Schlußteil zusammenzuarbeiten.

Die oben beschriebene Einheit, bestehend aus dem Stuhl 1, der Stützvorrichtung 5 und dem damit gekoppelten Sicherheitsgurt mit den dazugehörenden Teilen, kann als eine komplette Einheit hergestellt werden und zum Einbau in einen Bus oder ein ähnliches Fahrzeug geliefert werden. Dabei kann diese Einheit durch die Stützvorrichtung 5 in dem entsprechenden Fahrzeug oder ähnlichem befestigt werden, indem die Stützvorrichtung 5 durch geeignete Befestigungsmittel am Aufbau des Fahrzeugs befestigt wird.

In hochgeklappter Position des Stuhls 1 werden der an einander anliegende Sitz 2 und die Rückenlehne 3 oberhalb des Gestellbalkens 9 liegen.

In Figur 4 ist eine weitere mögliche Ausführungsform der erfindungsgemäßen Konstruktion dargestellt. Dabei sind in der Figur 4 dargestellte Teile, die den Teilen der oben anhand der Figuren 1-3 beschriebenen Konstruktion entsprechen, mit denselben Bezugszeichen versehen wie verwendet in den Figuren 1-3, wobei auf eine Beschreibung dieser Teile verzichtet wird.

Wie aus Figur 4 ersichtlich wird, ist dabei sowohl der waagrechte Teil 9' der Stützvorrichtung 5' wie der senkrechte Teil 10' der Stützvorrichtung 5' aus parallel zu einander verlaufenden Rohren 15 bzw. 16 aufgebaut, wobei die Rohre 15 über Bogenstücke 17 auf die Rohre 16 anschließen. An ihren von den Rohren 16 abgewendeten Enden sind die Rohre 15 unter einander durch ein Bogenstück 18 verbunden. Auf ähnliche Weise sind die von den Rohren 15 abgewendeten Enden der Rohre 16 durch ein Bogenstück 19 verbunden. Zwischen den sich parallel zu einander erstreckenden Rohren sind weiter noch Verbindungsteile 20 befestigt.

In der Höhe der oberen Enden der Rohre 16 wird wieder eine der in Figur 1 dargestellten Führungsvorrichtung 13 entsprechende Führungsvorrichtung 13 befestigt sein, während an dem am weitesten vom Sitz 2 entferntesten Rohr 15 eine Riemenhaspel befestigt sein wird.

Falls gewünscht, können auch hochklappbare Armstützen befestigt werden. Dabei wird angesichts Figur 1 eine Armstütze hochklappbar an der von der Stützvorrichtung 5 abgewendeten Seite der Rückenlehne 3 befestigt werden. Die andere Armstütze wird vorzugsweise hochklappbar in der Nähe der dem Stuhl zugewandten Seite der Stützvorrichtung mit der Stützvorrichtung gekoppelt, so daß diese Armstütze beim Hochklappen des Stuhls in der Aufbewahrungsposition nicht im Wege ist.

## Patentansprüche

1. Für den Einbau in ein Fahrzeug bestimmter hochklappbarer Stuhl, wobei ein Sitz durch eine nahe der Seite des Sitzes befindliche, sich hauptsächlich waagrecht erstreckende Gelenkachse mit einer am Aufbau des Fahrzeuges zu befestigenden Stützvorrichtung gekoppelt ist, **dadurch gekennzeichnet, daß** die Stützvorrichtung einen sich nach oben erstreckenden Teil aufweist, dessen oberes Ende sich in der Verwendungsposition des Stuhls auf einem höheren Niveau als der Sitz befindet, während ein Dreipunktgurt befestigt ist, dessen eines Ende in der Höhe des Sitzes mit der Stützvorrichtung verbunden ist und der Gurt durch eine in der Nähe des oberen Endes des sich nach oben erstreckenden Teils der Stützvorrichtung befestigte Führungsvorrichtung weitergeführt ist, während der Schließpunkt des Gurtes sich an der von der Stütze abgewendeten Seite des Sitzes befindet.

2. Hochklappbarer Stuhl nach Anspruch 1, **dadurch gekennzeichnet, daß** der Schließpunkt in der Höhe des unteren Endes der Rückenlehne mit einem den Sitz unterstützenden Sitzgestell verbunden ist.

3. Hochklappbarer Stuhl nach den Ansprüchen 1 oder 2, **dadurch gekennzeichnet, daß** die Stützvorrichtung mit einem in der Höhe des Sitzes befindlichen waagrechten Teil versehen ist, der sich in der Verwendungsposition des Sitzes neben dem Sitz erstreckt, während der sich nach oben erstreckende Teil der Stützvorrichtung auf ein in der Nähe des hinteren Endes des Sitzes befindliches Ende des sich waagrecht erstreckenden Teils anschließt.

4. Hochklappbarer Stuhl nach einem der vorhergehenden Ansprüche, **dadurch gekennzeichnet, daß** das obere Ende des sich nach oben erstreckenden Teils der Stützvorrichtung sich nahe dem oberen Ende der Rückenlehne befindet, wenn sich diese in der Verwendungsposition des Stuhls befindet.

5. Hochklappbarer Stuhl nach einem der vorhergehenden Ansprüche, **dadurch gekennzeichnet, daß** in hochgeklappter Position des Stuhls die aneinanderliegende Rückenlehne und Sitz oberhalb eines waagrecht verlaufenden Teils der Stützvorrichtung liegen.

6. Hochklappbarer Stuhl nach einem der vorhergehenden Ansprüche, **dadurch gekennzeichnet, daß** eine hochklappbare Armstütze mit der Stützvorrichtung gekoppelt ist.

7. Hochklappbarer Stuhl nach einem der vorgehenden Ansprüche, **dadurch gekennzeichnet, daß** eine hochklappbare Lehne mit der von der Stützvorrichtung abgewendeten Seite der Rückenlehne verbunden ist.
